# EUROPEAN PATENT APPLICATION

(11) **EP 4 174 027 A1**
(43) Date of publication of application: **03.05.2023**
(21) Application number: 21901002.2
(22) Date of filing: 01.12.2021
(51) Int. Cl.: C01G 53/00, H01M 4/525

(54) **POSITIVE ELECTRODE ACTIVE MATERIAL PRECURSOR, METHOD FOR PREPARING SAME, AND METHOD FOR PREPARING POSITIVE ELECTRODE ACTIVE MATERIAL USING SAME**

(30) Priority: 01.12.2020 KR 20200165676
(71) Applicant: Lg Chem, Ltd., Seoul 07336 (KR)
(72) Inventor: JEONG, Jin Hoo, Daejeon 34122 (KR); JEONG, Myung Gi, Daejeon 34122 (KR); JU, Jin Wook, Daejeon 34122 (KR); SEO, You Kyong, Daejeon 34122 (KR); SHIM, Jong Hyun, Daejeon 34122 (KR); GU, Ye Hyeon, Daejeon 34122 (KR)
(74) Representative: Hoffmann Eitle
(86) International application number: PCT/KR2021/018014
(87) International publication number: WO 2022/119314

(57) **Abstract**

The present invention relates to a positive electrode active material precursor capable of achieving a positive electrode active material in the form of a single particle even by a heat treatment at a low temperature, and particularly, to a positive electrode active material precursor having the composition represented by Formula 1 described in the present specification and including a composite transition metal in the form of a single particle, a method of preparing the same, and a method of preparing a positive electrode active material using the same.

## Description

### TECHNICAL FIELD

### Cross-reference to Related Applications

This application claims priority from Korean Patent Application No. 10-2020-0165676, filed on December 1, 2020, the disclosure of which is incorporated by reference herein.

### Technical Field

The present invention relates to a positive electrode active material precursor, a method of preparing the same, and a method of preparing a positive electrode active material using the same.

### BACKGROUND ART

Demand for secondary batteries as an energy source has been significantly increased as technology development and demand with respect to mobile devices and electric vehicles have recently increased. Among these secondary batteries, lithium secondary batteries having high energy density, high voltage, long cycle life, and low self-discharging rate have been commercialized and widely used.

Lithium transition metal oxides, such as lithium cobalt oxide such as LiCoO₂, lithium nickel oxide such as LiNiO₂, lithium manganese oxide such as LiMnO₂ or LiMn₂O₄, or lithium iron phosphate such as LiFePO₄, have been developed as a positive electrode active material of the lithium secondary battery, and, recently, lithium composite transition metal oxides including two or more types of transition metals, for example, Li[NiₐCo_{b}Mn_{c}]O₂, Li[NiₐCo_{b}Al_{c}]O₂, and Li[NiₐCo_{b}Mn_{c}Al_{d}]O₂, have been developed and widely used.

After a lithium transition metal hydroxide is prepared through a co-precipitation reaction which is performed while adding ammonia water, as a chelating agent, and an aqueous sodium hydroxide solution, as a basic aqueous solution, to a solvent in which raw materials containing transition metals, for example, nickel sulfate, cobalt sulfate, and manganese sulfate, are mixed, lithium transition metal oxides developed so far are typically prepared by mixing the lithium transition metal hydroxide with a lithium-containing raw material and optionally a doping raw material, and then performing a high-temperature heat treatment.

In a case in which the lithium transition metal hydroxide is prepared as described above, the lithium transition metal hydroxide in a form of a spherical secondary particle, which is formed by aggregation of primary particles of a few nm to a few tens of nm, is formed as a positive electrode active material precursor, and a high-temperature heat treatment at 900°C or higher is required in order to prepare a positive electrode active material in a form of a single particle by using the lithium transition metal hydroxide.

However, in a case in which the high-temperature heat treatment at 900°C or higher is performed to prepare the positive electrode active material in the form of a single particle, since a phase transition occurs to a rock salt structure of a NiO phase, there is a problem of degrading capacity characteristics and life characteristics of a battery including the positive electrode active material and a problem of increasing a resistance increase rate. In a case in which the heat treatment is performed at less than 900°C, since the positive electrode active material is present in a form of an over-sintered secondary particle, there is a problem in that an effect of improving lifetime and gas generation does not reach a level that is expected for the single particle.

Thus, studies have been attempted to develop a positive electrode active material precursor which does not require the high-temperature heat treatment at 900°C or higher even during the preparation of the positive electrode active material in the form of a single particle.

### DISCLOSURE OF THE INVENTION

### TECHNICAL PROBLEM

An aspect of the present invention provides a positive electrode active material precursor including a composite transition metal in a form of a single particle which may achieve a positive electrode active material in a form of a single particle even by a heat treatment at a low temperature.

Another aspect of the present invention provides a method of preparing the positive electrode active material precursor.

Another aspect of the present invention provides a method of preparing a positive electrode active material in which the positive electrode active material in the form of a single particle may be obtained even by a heat treatment at a low temperature by using the positive electrode active material precursor during the preparation of the positive electrode active material.

### TECHNICAL SOLUTION

According to an aspect of the present invention, there is provided a positive electrode active material precursor which has a composition represented by Formula 1 and includes a composite transition metal in a form of a single particle.

[Formula 1] NiₐM¹_{b}Mn_{c}M²_{d}

In Formula 1,
M¹ is at least one of cobalt (Co) and aluminum (Al),
M² is at least one of niobium (Nb), titanium (Ti), magnesium (Mg), tantalum (Ta), zirconium (Zr), tungsten (W), and scandium (Sc), and
0.6≤a<1, 0<b≤0.4, 0≤c≤0.4, and 0≤d≤0.2.

According to another aspect of the present invention, there is provided a method of preparing the positive electrode active material precursor according to the present invention which includes the steps of: (A) preparing a reaction solution by dissolving a transition metal (M) raw material in a reaction solvent; (B) forming a complex compound (MLₓ, 1≤x≤6) by adding a ligand (L), which forms the complex compound with a transition metal, to the reaction solution; and (C) forming a composite transition metal in a form of a single particle by adding a basic aqueous solution to the solution containing the complex compound, wherein the transition metal (M) raw material includes a nickel-containing raw material and an M¹ (at least one of Co or Al)-containing raw material.

According to another aspect of the present invention, there is provided a method of preparing a positive electrode active material which includes a step of mixing the positive electrode active material precursor according to the present invention with a lithium-containing raw material and performing a heat treatment at 700°C to 820°C to obtain a lithium transition metal oxide in a form of a single particle.

### ADVANTAGEOUS EFFECTS

Since a positive electrode active material precursor according to the present invention includes a composite transition metal in a form of a single particle, a positive electrode active material in a form of a single particle may be obtained even by heat treating the positive electrode active material precursor at a low temperature during the preparation of the positive electrode active material.

According to a method of preparing the positive electrode active material precursor according to the present invention, the positive electrode active material precursor including the composite transition metal in the form of a single particle may be prepared by the simple method.

A positive electrode active material, which is prepared according to a method of preparing a positive electrode active material according to the present invention, may achieve excellent capacity characteristics, life characteristics, and resistance characteristics and a significant effect of reducing gas generation when it is used in a secondary battery.

### BRIEF DESCRIPTION OF THE DRAWINGS

FIG. 1 is scanning electron microscope (SEM) images of a positive electrode active material precursor and a positive electrode active material of Example 1;
FIG. 2 is SEM images of a positive electrode active material precursor and a positive electrode active material of Example 2;
FIG. 3 is SEM images of a positive electrode active material precursor and a positive electrode active material of Example 3;
FIG. 4 is SEM images of a positive electrode active material precursor and a positive electrode active material of Comparative Example 1;
FIG. 5 is SEM images of a positive electrode active material precursor and a positive electrode active material of Comparative Example 2;
FIG. 6 is X-ray diffraction (XRD) data of the positive electrode active material precursor according to temperature during a heat treatment in Example 1;
FIG. 7 is XRD data of the positive electrode active material precursor of Example 1; and
FIG. 8 is a graph illustrating volume change rates of batteries using each of the positive electrode active materials prepared in Example 2 and Comparative Example 2.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The expression "D₅₀" in the present specification may be defined as a particle diameter at a cumulative volume of 50% in a particle size distribution curve (graph curve of particle size distribution). The D₅₀, for example, may be measured by using a laser diffraction method. The laser diffraction method may generally measure a particle diameter ranging from a submicron level to a few mm and may obtain highly repeatable and high-resolution results.

The term "on" in the present specification means not only a case in which one component is formed directly on an upper surface of another component, but also includes a case in which intervening components may also be present.

In the present specification, a single particle form is a concept in contrast to a spherical secondary particle form which is formed by aggregation of tens to hundreds of primary particles prepared by a conventional method, wherein it is a form in which particles are separated and/or dispersed from each other to form each independent and/or separated phase for each particle, but may include a form in which 2 to 10 particles are attached to each other.

### Positive Electrode Active Material Precursor

A positive electrode active material precursor according to the present invention has a composition represented by Formula 1 below, and includes a composite transition metal in a form of a single particle. According to the present invention, the positive electrode active material precursor may be the composite transition metal in the form of a single particle itself which has the composition represented by Formula 1 below. The positive electrode active material precursor may be one in which a surface of the composite transition metal in the form of a single particle, which has the composition represented by the following Formula 1, reacts with oxygen or moisture in the air to be surface-modified with an oxide or a hydrate.

[Formula 1] NiₐM¹_{b}Mn_{c}M²_{d}

In Formula 1,
M¹ is at least one of cobalt (Co) or aluminum (Al),
M² is at least one of niobium (Nb), titanium (Ti), magnesium (Mg), tantalum (Ta), zirconium (Zr), tungsten (W), or scandium (Sc), and
0.6≤a<1, 0<b≤0.4, 0≤c≤0.4, and 0≤d≤0.2.

As a result of a significant amount of research conducted into developing a positive electrode active material capable of achieving excellent life characteristics and resistance characteristics, the present inventors have found that, when the positive electrode active material precursor including the composite transition metal in the form of a single particle is used as a positive electrode active material precursor, capacity characteristics, life characteristics, resistance characteristics, and high-temperature storage characteristics of a secondary battery, which includes a positive electrode active material prepared by using the positive electrode active material precursor, may be improved, thereby leading to the completion of the present invention.

First, in a case of using a conventional positive electrode active material precursor in a form of a secondary particle formed by aggregation of primary particles, a high temperature heat treatment at 900°C or higher is required to prepare a positive electrode active material in a form of a single particle, but, in a case in which the positive electrode active material precursor in the form of a single particle is used as in the present invention, there is an advantage in that the positive electrode active material in the form of a single particle is prepared even through a heat treatment at less than 900°C. Accordingly, a phase transition to a rock salt structure of a NiO phase, which may occur when subjected to the high-temperature heat treatment at 900°C or higher, does not occur, and, as a result, a positive electrode active material having excellent performance may be prepared.

Since the positive electrode active material precursor according to the present invention is an isotropic transition metal rather than an anisotropic transition metal hydroxide, particles grow uniformly regardless of a growth direction, and thus, the positive electrode active material precursor is easy to be formed as a single particle in comparison to a hydroxide precursor.

a denotes an atomic fraction of nickel among metallic elements in the precursor, wherein a may satisfy 0.6≤a<1, preferably 0.6≤a≤0.98, or more preferably 0.7≤a≤0.95.

b denotes an atomic fraction of M¹ among the metallic elements in the precursor, wherein b may satisfy 0<b≤0.4, preferably 0.01≤b≤0.4, or more preferably 0.01≤b≤0.3.

c denotes an atomic fraction of manganese among the metallic elements in the precursor, wherein c may satisfy 0≤c≤0.4, preferably 0.01≤c≤0.4, or more preferably 0.01≤c≤0.3.

d denotes an atomic fraction of an M² element among the metallic elements in the precursor, wherein d may satisfy 0≤d≤0.2, preferably 0≤d≤0.1, or more preferably 0≤d≤0.05.

According to the present invention, the positive electrode active material precursor may include nickel and cobalt in terms of improving the resistance characteristics of the battery. For example, the positive electrode active material precursor may have a composition represented by Formula 1-1 below.

[Formula 1-1] NiₐCoₓAl_{y}Mn_{c}M²_{d}

In Formula 1-1,
M² is at least one of Nb, Ti, Mg, Ta, Zr, W, and Sc, and
0.6≤a<1, 0<x≤0.4, 0≤y≤0.4, 0≤c≤0.4, and 0≤d≤0.2.

According to the present invention, the positive electrode active material precursor may have an average particle diameter (D₅₀) of 0.1 um to 10 um, particularly 0.5 um to 5 µm, and more particularly 0.5 um to 3 um. In a case in which the average particle diameter of the positive electrode active material precursor is within the above range, since the number of lithium passes in contact with an electrolyte solution is increased to increase the number of lithium ions that may be used reversibly, high capacity and output characteristics may be exhibited.

According to an embodiment of the present invention, a crystal structure of the positive electrode active material precursor may be a face-centered cubic structure. In a case in which the crystal structure of the positive electrode active material precursor is the face-centered cubic structure, since a large amount of the positive electrode active material may be prepared with small volume and weight of the precursor due to characteristics of the close packed face-centered cubic structure, processability may be improved.

### Method of Preparing Positive Electrode Active Material Precursor

A method of preparing a positive electrode active material precursor according to the present invention includes the steps of: (A) preparing a reaction solution by dissolving a surface stabilizer and a transition metal (M) raw material in a reaction solvent; (B) forming a complex compound (MLₓ, 1≤x≤6) by adding a ligand (L), which forms the complex compound with a transition metal, to the reaction solution; and (C) forming a composite transition metal in a form of a single particle by adding a basic aqueous solution to the solution containing the complex compound. In this case, the transition metal (M) raw material includes a nickel-containing raw material and an M¹ (at least one of Co or Al)-containing raw material.

A positive electrode active material precursor, which is prepared according to the method of preparing a positive electrode active material precursor, may be the positive electrode active material precursor according to the present invention. Specifically, the positive electrode active material precursor may have the composition represented by Formula 1 and may include the composite transition metal in the form of a single particle. According to the present invention, the positive electrode active material precursor may be the composite transition metal in the form of a single particle itself which has the composition represented by Formula 1, but may be one in which the surface thereof reacts with oxygen or moisture in the air to be surface-modified with an oxide or a hydrate.

Hereinafter, each step of the method of preparing a positive electrode active material precursor will be described in detail.

### Step (A)

Step (A) is a step of preparing a reaction solution by dissolving a transition metal (M) raw material in a reaction solvent. The transition metal (M) raw material includes a nickel-containing raw material and an M¹ (at least one of Co or Al)-containing raw material. The transition metal (M) raw material may further include an M² (at least one of Nb, Ti, Mg, Ta, Zr, W, or Sc)-containing raw material.

The reaction solution may further include a surface stabilizer. The surface stabilizer may prevent agglomeration of transition metal ions or transition metal particles included in the transition metal raw material. Also, excessive agglomeration between precursor particles due to soft magnetic properties may be prevented by stabilizing the surface of the prepared positive electrode active material precursor, and, in a case in which sintering is performed for the preparation of the positive electrode active material, agglomeration between active material particles, which may occur due to high surface energy caused by a small particle size, may also be prevented.

The reaction solvent may be deionized water, distilled water, industrial water, or general water. The reaction solvent may specifically be deionized water and distilled water. In this case, since an amount of impurities is small, purity of the positive electrode active material precursor thus prepared may be high.

According to the present invention, the surface stabilizer may include at least one of a compound containing a citric acid salt, a compound containing a dodecyl sulfate salt, or a compound containing polyvinylpyrrolidone. Specifically, the surface stabilizer may be a compound containing a citric acid salt, and the compound containing the citric acid salt may include at least one of sodium citrate, potassium citrate, or triethyl citrate. The compound containing the citric acid salt may specifically be sodium citrate and potassium citrate. In this case, the compound containing the citric acid salt may stabilize the surface of the particles to suppress aggregation between the particles and to have a uniform particle size distribution.

The surface stabilizer may be added in an amount of 100 mol% to 200 mol% based on the total number of moles of the transition metal ions included in the transition metal raw material.

The transition metal (M) raw material essentially includes the nickel-containing raw material and the M¹ (at least one of Co or Al) -containing raw material, and may further include a cobalt-containing raw material, a niobium-containing raw material, a titanium-containing raw material, a magnesium-containing raw material, a tantalum-containing raw material, a zirconium-containing raw material, a tungsten-containing raw material, or a scandium-containing raw material, and a combination thereof.

The nickel-containing raw material may be nickel-containing acetic acid salts, nitrates, sulfates, halides, sulfides, hydroxides, oxides, or oxyhydroxides, and may specifically be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, a nickel halide (specifically, NiCl₂), or a combination thereof, but the nickel-containing raw material is not limited thereto.

The manganese-containing raw material may be manganese-containing acetic acid salts, nitrates, sulfates, halides, sulfides, hydroxides, oxides, or oxyhydroxides, and may specifically be MnCl₂, Mn₂O₃, MnO₂, Mn₃O₄, MnCO₃, Mn(NO₃)₂, MnSO₄, manganese acetate, manganese dicarboxylate, manganese citrate, a fatty acid manganese salt, a manganese oxyhydroxide, manganese chloride, or a combination thereof, but the manganese-containing raw material is not limited thereto.

The aluminum-containing raw material may be aluminum-containing acetic acid salts, nitrates, sulfates, halides, sulfides, hydroxides, oxides, or oxyhydroxides, and may specifically be AlCl₃, Al₂O₃, aluminum hydroxide, aluminum sulfate, aluminum nitrate, aluminum acetate, or a combination thereof, but the aluminum-containing raw material is not limited thereto.

The cobalt-containing raw material may be cobalt-containing acetic acid salts, nitrates, sulfates, halides, sulfides, hydroxides, oxides, or oxyhydroxides, and may specifically be CoCl₂, Co(OH)₂, CoOOH, Co(OCOCH₃)₂·4H₂O, Co(NO₃)₂·6H₂O, CoSO₄, Co(SO₄)₂·7H₂O, or a combination thereof, but the cobalt-containing raw material is not limited thereto.

M² (at least one of Nb, Ti, Mg, Ta, Zr, W, or Sc)-containing raw material may be M² (at least one of Nb, Ti, Mg, Ta, Zr, W, or Sc) -containing acetic acid salts, nitrates, sulfates, halides, sulfides, hydroxides, oxides, or oxyhydroxides, but the M²-containing raw material is not limited thereto.

### Step (B)

Step (B) is a step of forming a complex compound (MLₓ, 1≤x≤6) by adding a ligand (L), which forms the complex compound with a transition metal, to the reaction solution.

According to the present invention, the ligand may include at least one of hydrazine, sodium borohydride, lithium aluminum hydride, oxalic acid, formic acid, ascorbic acid, or hydrogen peroxide. The ligand may specifically be hydrazine and lithium aluminum hydride. In this case, since it is a ligand and a strong reducing agent at the same time, it may be advantageous to prepare a uniform transition metal precursor.

The complex compound may be Ni(N₂H₄)₂, Ni(N₂H₄)₃, Co(N₂H₄)₂, Co(N₂H₄)₃, Mn(N₂H₄)₂, Mn(N₂H₄)₃, Al(N₂H₄)₂, or Al(N₂H₄)₃.

According to the present invention, the ligand may be added in an amount such that a molar ratio of the transition metal included in the reaction solution to the ligand is in a range of 1:2 to 1:12. The ligand may be specifically added in an amount such that the molar ratio of the transition metal included in the reaction solution to the ligand is in a range of 1:2 to 1:8, for example, 1:2 to 1:6. In this case, there is an advantageous effect in the preparation of a uniform transition metal precursor in terms of size and composition of the particle.

According to the present invention, step (B) may be performed at 25°C to 80°C, particularly 40°C to 60°C, and more particularly 50°C to 60°C. In a case in which step (B) is performed within the above range, particles having uniform composition and size may be synthesized by controlling viscosity and reaction rate of the solution, and an unnecessary side reaction may be suppressed.

### Step (C)

Step (C) is a step of forming a composite transition metal in a form of a single particle by adding a basic aqueous solution to the solution containing the complex compound.

If the basic aqueous solution is added to the solution containing the complex compound, a transition metal hydroxide is first formed, and the transition metal hydroxide is reduced to prepare a transition metal.

For example, in a case in which the complex compound is Ni(N₂H₄)₂ and the basic aqueous solution contains NaOH, the following reaction occurs.

[Reaction Equation 1] Ni(N₂H₄)₂ + 2NaOH → Ni(OH)₂ + 2N₂H₄ + 2Na⁺

[Reaction Equation 2] 2Ni(OH)₂ + N₂H₄ → 2Ni + N₂ (g) + 4H₂O

According to the present invention, the basic aqueous solution may be added in an amount such that a molar ratio of the transition metal included in the reaction solution to the basic aqueous solution is in a range of 1:2 to 1:12. The basic aqueous solution may be specifically added in an amount such that the molar ratio of the transition metal included in the reaction solution to the basic aqueous solution is in a range of 1:2 to 1:10, 1:2 to 1:8, for example, 1:2 to 1:6. In this case, a uniform size distribution may be obtained, a hydroxide ratio may be suppressed, and a pure transition metal precursor may be prepared. Also, the number of grains and defects in the particle may be reduced.

### Method of Preparing Positive Electrode Active Material

A method of preparing a positive electrode active material according to the present invention includes a step of mixing the positive electrode active material precursor according to the present invention with a lithium-containing raw material and then performing a heat treatment at 700°C to 820°C to obtain a lithium transition metal oxide in a form of a single particle.

In a method of preparing a positive electrode active material using a conventional positive electrode active material precursor, a high-temperature heat treatment at 900°C or higher was required to obtain a positive electrode active material in a form of a single particle. However, according to the present invention, since the composite transition metal in the form of a single particle is used during the preparation of the positive electrode active material, a positive electrode active material in the form of a single particle may be obtained even by a heat treatment at a low temperature of 700°C to 820°C. That is, since the precursor is in the form of a single particle, a positive electrode active material in the form of a single particle may be obtained even by the heat treatment at a low temperature of 700°C to 820°C, instead of the high-temperature heat treatment of 900°C or higher.

The lithium-containing raw material may include at least one of lithium hydroxide hydrate, lithium carbonate, lithium nitrate, or lithium oxide. The lithium-containing raw material may specifically be a lithium hydroxide hydrate, for example, LiOH·H₂O. In this case, reactivity between the precursor having a high atomic fraction of nickel among the metallic elements in the precursor and the lithium-containing raw material may be improved.

The positive electrode active material precursor and the lithium-containing raw material may be mixed in a molar ratio of 1:1.02 to 1:1.2, particularly 1:1.02 to 1:1.1, and more particularly 1:1.02 to 1:1.07 during the preparation of the positive electrode active material. In a case in which the lithium-containing raw material is mixed in a ratio less than the above range, capacity of the prepared positive electrode active material may be reduced, and, in a case in which the lithium-containing raw material is mixed in a ratio greater than the above range, unreacted lithium (Li) remains as a by-product, the capacity may be reduced, and separation of the positive electrode active material particles (causing a positive electrode active material impregnation phenomenon) may occur after sintering.

The heat treatment temperature may be in a range of 700°C to 820°C, particularly 720°C to 820°C, and more particularly 750°C to 820°C. In a case in which the heat treatment temperature is within the above range, crystallinity of the particle may be increased, a phenomenon, in which Ni²⁺ ions are inserted into a Li layer, may be suppressed, and accordingly, excellent electrochemical properties may be achieved when the positive electrode active material is used in the battery.

The heat treatment may be performed in an oxygen atmosphere. In this case, the reactivity may be increased, the particles may be uniformly sintered, and a degree of crystallinity may be increased.

The heat treatment may be performed for 5 hours to 20 hours. The heat treatment may specifically be performed for 8 hours to 18 hours, for example, 10 hours to 16 hours. In a case in which the heat treatment time is within the above range, since the lithium source reacts for a sufficient period of time, there is an effect of increasing the degree of crystallinity through rearrangement of atoms and reducing the defects.

The method of preparing a positive electrode active material may prepare a positive electrode active material doped with a doping element by mixing a doping element-containing material together when the positive electrode active material precursor and the lithium-containing raw material are mixed and preforming a heat treatment.

Also, the method of preparing a positive electrode active material may prepare a positive electrode active material, in which a coating layer is formed on the lithium transition metal oxide, by mixing a coating element-containing raw material with the prepared lithium transition metal oxide in the form of a single particle and performing a secondary heat treatment.

The positive electrode active material prepared according to the method of preparing a positive electrode active material is a lithium transition metal oxide in the form of a single particle, wherein it may have a composition represented by Formula 2 below.

[Formula 2] Liₑ[Ni_{a'}M¹_{b'}Mn_{c'}M³_{d'}]O_{2-f}A_{f}

In Formula 2,
M¹ is at least one element of Co or Al,
M³ is at least one of boron (B), Mg, calcium (Ca), Ti, vanadium (V), chromium (Cr), iron (Fe), zinc (Zn), gallium (Ga), yttrium (Y), Zr, Nb, molybdenum (Mo), Ta, Sc, or W,
A is at least one of fluorine (F), chlorine (Cl), bromine (Br), iodine (I), astatine (At), or sulfur (S), and
0.9≤e≤1.2, 0.6≤a<1, 0<b'≤0.4, 0≤c'≤0.4, 0≤d'≤0.2, a'+b'+c'+d'=1, and 0≤f≤0.2.

a' represents an atomic fraction of nickel among metallic elements in the positive electrode active material, wherein a may satisfy 0.6≤a<1, preferably 0.6≤a'≤0.98, or more preferably 0.7≤a'≤0.95.

b' represents an atomic fraction of an M¹ element among the metallic elements in the positive electrode active material, wherein b' may satisfy 0<b'≤0.4, preferably 0.01≤b'≤0.4, or more preferably 0.01≤b'≤0.3.

c' represents an atomic fraction of manganese among the metallic elements in the positive electrode active material, wherein c' may satisfy 0≤c'≤0.4, preferably 0.01≤c'≤0.4, or more preferably 0.01≤c'≤0.3.

d' represents an atomic fraction of an M³ element among the metallic elements in the positive electrode active material, wherein d' may satisfy 0≤d≤0.2, preferably 0≤d'≤0.1, or more preferably 0≤d'≤0.05.

According to the present invention, the positive electrode active material may include nickel and cobalt. For example, the positive electrode active material may have a composition represented by Formula 2-1 below.

[Formula 2-1] Liₑ[Ni_{a'}Co_{x'}Al_{y'}Mn_{c'}M²_{d'}] O_{2-f}A_{f}

In Formula 2-1,
M³ is at least one of B, Mg, Ca, Ti, V, Cr, Fe, Zn, Ga, Y, Zr, Nb, Mo, Ta, Sc, or W,
A is at least one of F, Cl, Br, I, At, or S, and
0.9≤e≤1.2, 0.6≤a<1, 0<x'≤0.4, 0≤y'≤0.4, 0≤c'≤0.4, 0≤d'≤0.2, a'+b'+c'+d'=1, and 0≤f≤0.2.

In a case in which a transition metal cation having a size similar to that of a lithium ion (Li⁺) exists in a lithium transition metal oxide, a phenomenon, in which transition metal cations are mixed into a lithium layer, occurs, wherein it is called a cation mixing phenomenon. With respect to a lithium nickel cobalt-based oxide, since ions, such as Ni³⁺ and Co³⁺, have a large difference in size from Li⁺, there is little possibility of cation mixing. However, since a Ni²⁺ ion with an oxidation number of +2 among nickel ions has a size similar to that of the lithium ion, the cation mixing is likely to occur. Since a layered crystal structure is not developed properly when the Ni²⁺ ions are mixed in the lithium layer, structural stability of the active material is reduced and movement of the lithium ions is hindered by the Ni²⁺ ions present in the lithium layer, and thus, battery performance is degraded. Particularly, in a case in which the positive electrode active material is sintered at a high temperature of 900°C or higher, a ratio, in which phase transition from a stable layered structure of LiNO₂ to a NiO phase occurs, increases, and a degree of cation mixing tends to be significantly increased. However, since the positive electrode active material prepared according to the method of preparing a positive electrode active material of the present invention may suppress the above-described phase transition by being sintered at a temperature of 820°C or less, the degree of cation mixing may be low. Specifically, the degree of cation mixing may be 1% or less. Thus, a battery including the positive electrode active material prepared according to the method of preparing a positive electrode active material may achieve excellent electrochemical performance.

### Positive Electrode

Also, the present invention may provide a positive electrode for a lithium secondary battery which includes the positive electrode active material prepared by the above-described method.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

The positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an etherbased solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN (C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

After dissolving 147.50 g of sodium citrate (Na₃C₆H₅O₇) in 300 ml of deionized water at 60°C, 106.96 g of NiCl₂, 9.52 g of CoCl₂, and 2.40 g of AlCl₃ were respectively dissolved such that a molar ratio of Ni:Co:Al, as transition metals, was 90:8:2, and deionized water was added so that a volume of total solution became 500 ml to prepare a reaction solution.

A transition metal-N₂H₄ composite was formed by adding hydrazine (N₂H₄) to the reaction solution so that a molar ratio of Ni+Co+Al:N₂H₄ was 1:4.

After a composite transition metal in a form of a single particle was formed by adding a 50 wt% sodium hydroxide aqueous solution to the solution containing the transition metal-N₂H₄ composite such that a molar ratio of Ni+Co+Al:NaOH was 1:6, the composite transition metal in the form of a single particle was washed and dried to prepare positive electrode active material precursor A which was represented by Ni_{0.9}Co_{0.08}Al_{0.02} and was a composite transition metal in the form of a single particle. An average particle diameter (D₅₀) of the positive electrode active material precursor A was 800 nm.

After the positive electrode active material precursor A and LiOH were mixed so that a molar ratio of Ni+Co+Al:Li was 1:1.05 and the temperature was increased from room temperature to 760°C at a heating rate of 20°C/hour, a heat treatment was performed at 760°C for 16 hours to prepare positive electrode active material I in a form of a single particle which was represented by Li[Ni_{0.9}Co_{0.08}Al_{0.02}]O₂.

### Example 2

After dissolving 147.50 g of sodium citrate (Na₃C₆H₅O₇) in 300 ml of deionized water at 60°C, 50.51 g of NiCl₂ and 8.92 g of CoCl₂ were respectively dissolved such that a molar ratio of Ni:Co, as transition metals, was 85:15, and deionized water was added so that a volume of total solution became 500 ml to prepare a reaction solution.

A transition metal-N₂H₄ composite was formed by adding hydrazine (N₂H₄) to the reaction solution so that a molar ratio of Ni+Co:N₂H₄ was 1:6.

After a composite transition metal in a form of a single particle was formed by adding a 50 wt% sodium hydroxide aqueous solution to the solution containing the transition metal-N₂H₄ composite such that a molar ratio of Ni+Co:NaOH was 1:4, the composite transition metal in the form of a single particle was washed and dried to prepare positive electrode active material precursor B which was represented by Ni_{0.85}Co_{0.15} and was a composite transition metal in the form of a single particle. An average particle diameter (D₅₀) of the positive electrode active material precursor B was 1 µm.

After the positive electrode active material precursor B and LiOH were mixed so that a molar ratio of Ni+Co:Li was 1:1.05 and the temperature was increased from room temperature to 760°C at a heating rate of 20°C/hour, a heat treatment was performed at 760°C for 16 hours to prepare positive electrode active material II in a form of a single particle which was represented by Li[Ni_{0.85}Co_{0.15}]O₂.

### Example 3

After dissolving 147.50 g of sodium citrate (Na₃C₆H₅O₇) in 300 ml of deionized water at 60°C, 56.45 g of NiCl₂ and 3.06 g of AlCl₃ were respectively dissolved such that a molar ratio of Ni:Al, as transition metals, was 95:5, and deionized water was added so that a volume of total solution became 500 ml to prepare a reaction solution.

A transition metal-N₂H₄ composite was formed by adding hydrazine (N₂H₄) to the reaction solution so that a molar ratio of Ni+Al:N₂H₄ was 1:6.

After a composite transition metal in a form of a single particle was formed by adding a 50 wt% sodium hydroxide aqueous solution to the solution containing the transition metal-N₂H₄ composite such that a molar ratio of Ni+Al:NaOH was 1:4, the composite transition metal in the form of a single particle was washed and dried to prepare positive electrode active material precursor C which was represented by Ni_{0.95}Al_{0.05} and was a composite transition metal in the form of a single particle. An average particle diameter (D₅₀) of the positive electrode active material precursor C was 1 µm.

After the positive electrode active material precursor C and LiOH were mixed so that a molar ratio of Ni+Al:Li was 1:1.05 and the temperature was increased from room temperature to 760°C at a heating rate of 20°C/hour, a heat treatment was performed at 760°C for 16 hours to prepare positive electrode active material III in a form of a single particle which was represented by Li[Ni_{0.95}Al_{0.05}]O₂.

### Comparative Example 1

Ni(SO₃)₂ and Co(SO₃)₂ were mixed in deionized water in amounts such that a molar ratio of Ni:Co was 92:8 to prepare transition metal aqueous solution 1 with a concentration of 2.29 M. Al(NO₃)₂ was further mixed with deionized water to prepare transition metal aqueous solution 2 with a concentration of 2.29 M.

After deionized water was put into a reactor, dissolved oxygen in the water was removed by purging the reactor with nitrogen gas to create a non-oxidizing atmosphere in the reactor. Thereafter, 6 M NaOH was added so that a pH in the reactor was maintained at 12.5.

Thereafter, while the transition metal aqueous solution 1, the transition metal aqueous solution 2, a NaOH aqueous solution, and a NH₄OH aqueous solution were added to the reactor at rates of 11.76 mL/min, 0.48 mL/min, 7.2 mL/min, and 1.8 mL/min, respectively, a reaction was performed for 48 hours at a reaction temperature of 58°C, a pH of 11.4, and a stirring speed of 350 rpm to prepare positive electrode active material precursor D which was represented by Ni_{0.9}Co_{0.08}Al_{0.02}(OH)₂ and was in a form of a spherical secondary particle formed by aggregation of primary particles. An average particle diameter (D₅₀) of the positive electrode active material precursor D was 4 µm.

The positive electrode active material precursor D and LiOH were mixed so that a molar ratio of Ni+Co+Al:Li was 1:1.05 and a heat treatment was performed at 1,000°C for 10 hours to prepare a positive electrode active material which was represented by Li[Ni_{0.9}Co_{0.08}Al_{0.02}]O₂.

### Comparative Example 2

Ni(SO₃)₂ and Co(SO₃)₂ were mixed in deionized water in amounts such that a molar ratio of Ni:Co was 85:15 to prepare transition metal aqueous solution 3 with a concentration of 2.29 M.

After deionized water was put into a reactor, dissolved oxygen in the water was removed by purging the reactor with nitrogen gas to create a non-oxidizing atmosphere in the reactor. Thereafter, 6 M NaOH was added so that a pH in the reactor was maintained at 12.5.

Thereafter, while the transition metal aqueous solution 3, a NaOH aqueous solution, and a NH₄OH aqueous solution were added to the reactor at rates of 11.76 mL/min, 7.2 mL/min, and 1.8 mL/min, respectively, a reaction was performed for 48 hours at a reaction temperature of 58°C, a pH of 11.4, and a stirring speed of 350 rpm to prepare positive electrode active material precursor E which was represented by Ni_{0.85}Co_{0.15}(OH)₂ and was in a form of a spherical secondary particle formed by aggregation of primary particles. An average particle diameter (D₅₀) of the positive electrode active material precursor E was 4 µm.

The positive electrode active material precursor E and LiOH were mixed so that a molar ratio of Ni+Co:Li was 1:1.05 and a heat treatment was performed at 1,000°C for 10 hours to prepare a positive electrode active material which was represented by Li[Ni_{0.85}Co_{0.15}]O₂.

### Experimental Examples

### Experimental Example 1: Analysis of Positive Electrode Active Material Precursor and Positive Electrode Active Material

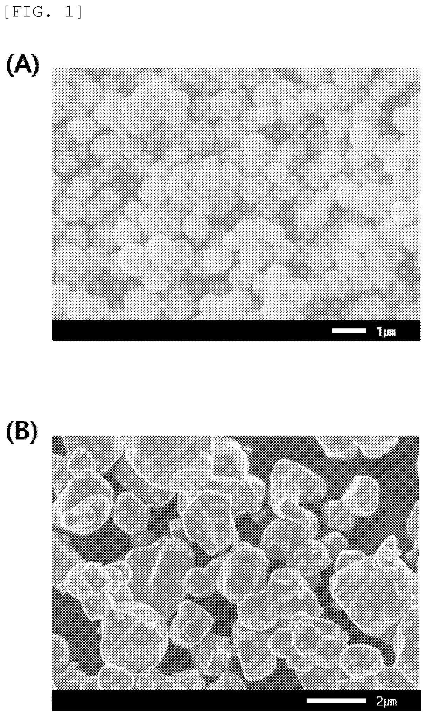

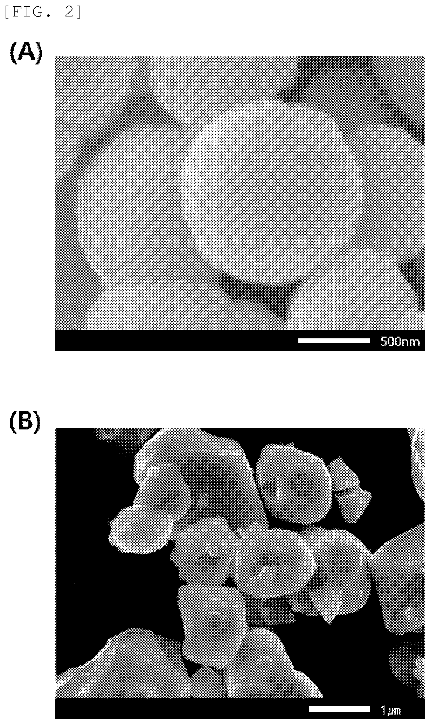

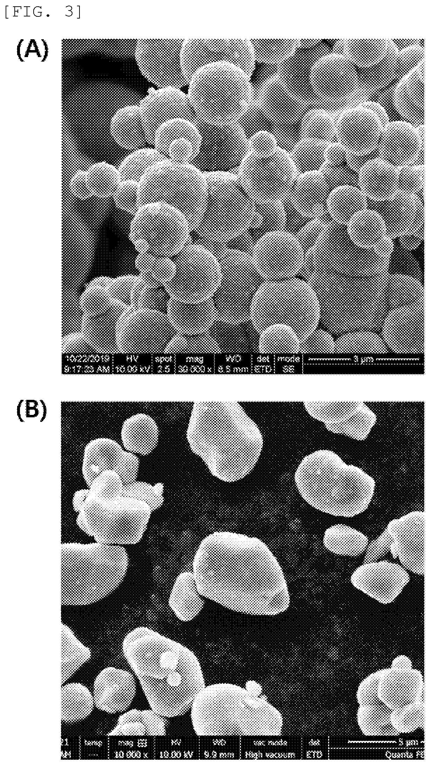

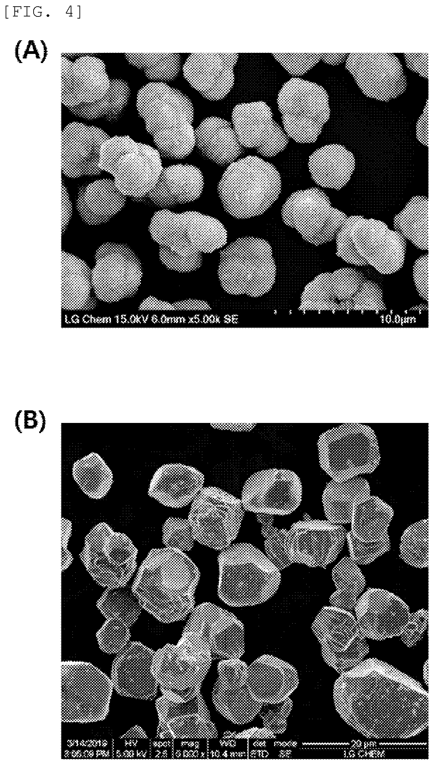

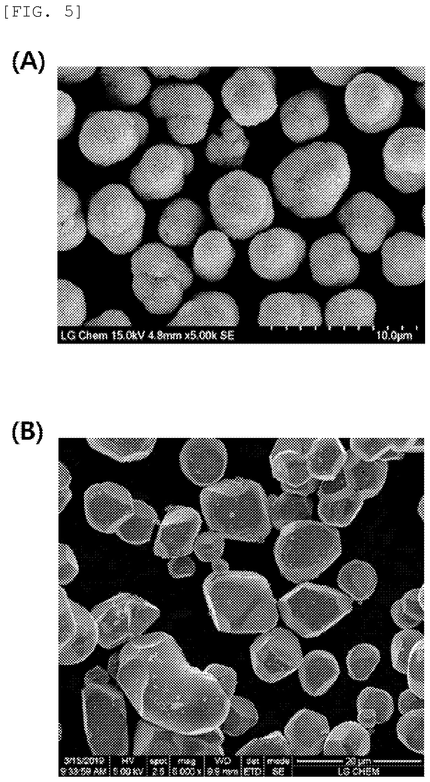

Scanning electron microscope (SEM) images of the positive electrode active material precursor and the positive electrode active material of Example 1 were measured and illustrated in FIG. 1(A) and FIG. 1(B), respectively. SEM images of the positive electrode active material precursor and the positive electrode active material of Example 2 were measured and illustrated in FIG. 2(A) and FIG. 2(B), respectively. SEM images of the positive electrode active material precursor and the positive electrode active material of Example 3 were measured and illustrated in FIG. 3(A) and FIG. 3(B), respectively. SEM images of the positive electrode active material precursor and the positive electrode active material of Comparative Example 1 were measured and illustrated in FIG. 4(A) and FIG. 4(B), respectively. SEM images of the positive electrode active material precursor and the positive electrode active material of Comparative Example 2 were measured and illustrated in FIG. 5(A) and FIG. 5(B), respectively.

Referring to FIGS. 1 to 5, the positive electrode active material precursors of Examples 1 to 3 were in the form of a single particle, wherein it may be confirmed that the positive electrode active materials in the form of a single particle were prepared without a high-temperature heat treatment of 900°C or higher during the preparation of the positive electrode active material. In contrast, the positive electrode active material precursors of Comparative Examples 1 and 2 were in the form of a secondary particle formed by aggregation of primary particles, wherein it may be confirmed that the positive electrode active materials in the form of a single particle were prepared only by a high-temperature heat treatment of 1,000°C or higher.

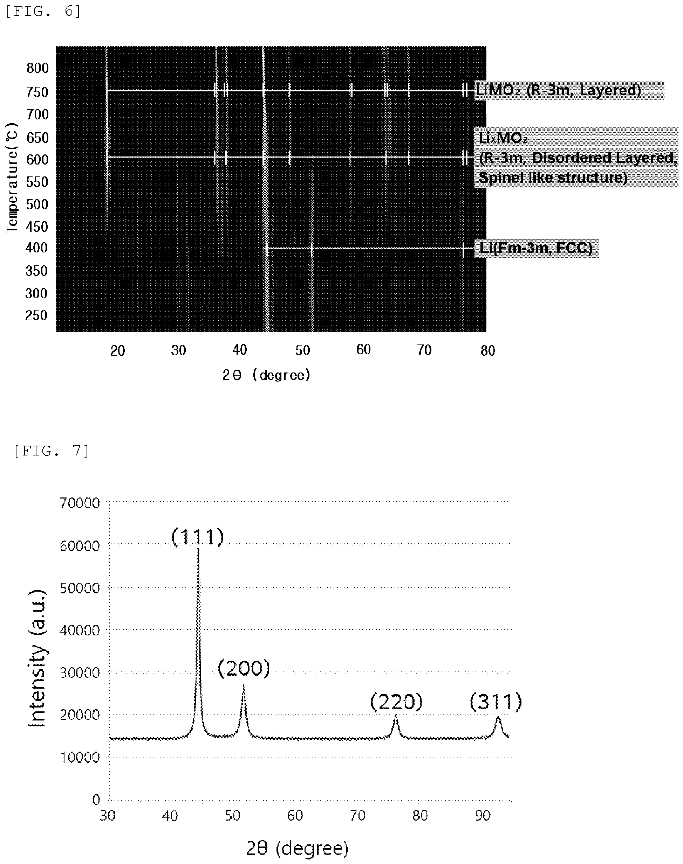

X-ray diffraction (XRD) data of the positive electrode active material precursor according to temperature were measured using in-situ XRD (Malvern PANalytical B.V. EMPYREAN, Cu Target) while performing the heat treatment in Example 1 and illustrated in FIG. 6.

Referring to FIG. 6, even in a case in which the heat treatment was performed after the positive electrode active material precursor of Example 1 was mixed with the lithium-containing raw material, it may be confirmed that a layered positive electrode active material like the conventional positive electrode active material was prepared.

XRD data of the positive electrode active material precursor of Example 1 were measured using XRD (Bruker Corporation, D4 Endeavor, Cu Target) and illustrated in FIG. 7.

Referring to FIG. 7, it may be confirmed that the positive electrode active material precursor of Example 1 had a face-centered cubic structure. Also, it may be confirmed that the positive electrode active material precursor of Example 1 was a metal in which Ni, Co, and Al were mixed.

### Experimental Example 2: Capacity and Resistance Characteristics Evaluation

The positive electrode active materials prepared in Examples 1 to 3 and Comparative Examples 1 and 2 were used to prepare lithium secondary batteries, and initial charge capacity, initial discharge capacity, capacity retention, and resistance increase rate were evaluated for each of the lithium secondary batteries.

Each of the positive electrode active materials prepared in Examples 1 to 3 and Comparative Examples 1 and 2, a conductive agent (FX35), and a binder (PVdF) were mixed in an N-methyl-2-pyrrolidone (NMP) solvent at a weight ratio of 97.5:1:1.5 to prepare a positive electrode slurry. One surface of an aluminum current collector was coated with the positive electrode slurry, dried, and then rolled to prepare a positive electrode. Each lithium secondary battery was prepared by preparing an electrode assembly by disposing a separator between the positive electrode and Li metal, disposing the electrode assembly in a battery case, and then injecting an electrolyte solution. In this case, as the electrolyte solution, an electrolyte solution was used in which 1 M LiPF₆ was dissolved in an organic solvent in which ethylene carbonate, ethylmethyl carbonate, and diethyl carbonate were mixed in a volume ratio of 3:3:4.

Then, each of the secondary batteries was charged at a constant current of 0.1 C to 4.25 V at 25°C. Thereafter, each secondary battery was discharged at a constant current of 0.1 C to 3 V to measure initial charge capacity and initial discharge capacity. The results thereof are presented in Table 1 below.

In addition, capacity of the lithium secondary battery was measured by repeating a charge and discharge cycle 30 times at a constant current of 0.33 C in a voltage range of 3.0 V to 4.25 V at 45°C, and, particularly, a ratio of 30^{th} cycle discharge capacity to 1^{st} cycle discharge capacity was defined as a capacity retention and the capacity retentions are presented in Table 1 below. Also, a ratio of DCIR, which was obtained by dividing a voltage drop (ΔV) for 60 seconds in a 30^{th} discharge cycle by the current, to DCIR, which was obtained by dividing a voltage drop (ΔV) for 60 seconds in a 1^{st} discharge cycle by the current, was defined as a resistance increase rate and the resistance increase rates are presented in Table 1 below.

**[Table 1]**

| | Initial charge capacity (mAh/g) at 25°C | Initial discharge capacity (mAh/g) at 25°C | Capacity retention (%) at 45°C | Resistance increase rate (%) at 45°C |
|---|---|---|---|---|
| Example 1 | 219.8 | 191.2 | 90.30 | 120 |
| Example 2 | 220.5 | 194.3 | 93.49 | 117 |
| Example 3 | 230.2 | 206.5 | 92.40 | 124 |
| Comparati ve Example 1 | 243.8 | 206.2 | 87.27 | 142 |
| Comparati ve Example 2 | 243.3 | 205.8 | 85.43 | 135 |

### Experimental Example 3: Volume Change Rate Evaluation

The positive electrode active materials prepared in Example 2 and Comparative Example 2 were used to prepare lithium secondary batteries, and a volume change rate when left standing at a high temperature was evaluated for each of the lithium secondary batteries.

Each of the positive electrode active materials prepared in Example 2 and Comparative Example 2, a conductive agent (FX35), and a binder (PVdF) were mixed in an N-methyl-2-pyrrolidone (NMP) solvent at a weight ratio of 97.5:1:1.5 to prepare a positive electrode slurry. One surface of an aluminum current collector was coated with the positive electrode slurry, dried, and then rolled to prepare a positive electrode. Then, a negative electrode active material (artificial graphite), a conductive agent (Super C-65), and a binder (PVdF) were mixed in water (H₂O) at a ratio of 95.6:2.1:2.3 to prepare a negative electrode slurry. One surface of a copper current collector was coated with the negative electrode slurry, dried, and then rolled to prepare a negative electrode. Each lithium secondary battery was prepared by preparing an electrode assembly by disposing a separator between the positive electrode and the negative electrode, disposing the electrode assembly in a battery case, and then injecting an electrolyte solution. In this case, as the electrolyte solution, an electrolyte solution was used in which 0.7 M LiPF₆ and 0.3 M LiFSI were dissolved in an organic solvent in which ethylene carbonate and ethylmethyl carbonate were mixed in a volume ratio of 3:7.

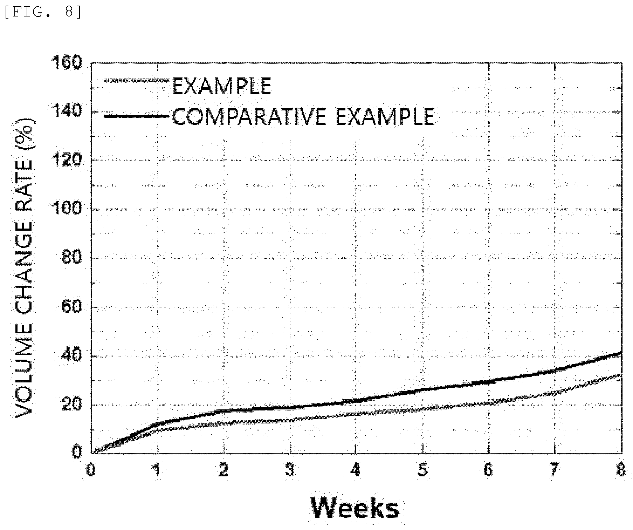

A gas generation amount was measured immediately after the secondary battery was prepared and every week while the secondary battery was stored at 60°C for 8 weeks, wherein a ratio of the gas generation amount of each week to the gas generation amount immediately after the preparation was defined as a volume change rate of the battery and the volume change rates are presented in Table 2 and FIG. 8. In this case, the gas generation amount was measured using the Archimedes principle.

**[Table 2]**

| | Volume change rate (%) | | | | | | | |
|---|---|---|---|---|---|---|---|---|
| | 1 week | 2 weeks | 3 weeks | 4 weeks | 5 weeks | 6 weeks | 7 weeks | 8 weeks |
| Example 2 | 9.4 | 12.4 | 13.7 | 16.3 | 18.2 | 20.9 | 24.8 | 32.3 |
| Comparati ve Example 2 | 12.0 | 17.6 | 18.9 | 21.7 | 26.0 | 29.3 | 33.9 | 41.4 |

Referring to Tables 1 and 2 and FIG. 8, it may be confirmed that the battery, which included the positive electrode active material prepared by using the positive electrode active material precursor according to the present invention, had excellent capacity characteristics, excellent life characteristics at a high temperature, and a small resistance increase rate at a high temperature. Also, it may be confirmed that the battery, which included the positive electrode active material prepared by using the positive electrode active material precursor according to the present invention, had a significantly lower volume change rate when left standing for a long time at a high temperature than the battery including the positive electrode active material which was prepared by using the positive electrode active material precursor in the form of a secondary particle formed by aggregation of primary particles.

## Claims

1. A positive electrode active material precursor having a composition represented by Formula 1 and comprising a composite transition metal in a form of a single particle:
[Formula 1] NiₐM¹_{b}Mn_{c}M²_{d}
wherein, in Formula 1,
M¹ is at least one of cobalt (Co) or aluminum (Al),
M² is at least one of niobium (Nb), titanium (Ti), magnesium (Mg), tantalum (Ta), zirconium (Zr), tungsten (W), or scandium (Sc), and
0.6≤a<1, 0<b≤0.4, 0≤c≤0.4, and 0≤d≤0.2.

2. The positive electrode active material precursor of claim 1, wherein an average particle diameter (D₅₀) is in a range of 0.1 um to 10 µm.

3. The positive electrode active material precursor of claim 1, wherein a crystal structure is a face-centered cubic structure.

4. A method of preparing the positive electrode active material precursor of claim 1, the method comprising :
(A) preparing a reaction solution by dissolving a transition metal (M) raw material in a reaction solvent;
(B) forming a complex compound (MLₓ, 1≤x≤6) by adding a ligand (L), which forms the complex compound with a transition metal, to the reaction solution; and
(C) forming a composite transition metal in a form of a single particle by adding a basic aqueous solution to the solution containing the complex compound,
wherein the transition metal (M) raw material comprises a nickel-containing raw material and an M¹ (at least one of cobalt (Co) or aluminum (Al))-containing raw material.

5. The method of claim 4, wherein the reaction solution further comprises a surface stabilizer.

6. The method of claim 5, wherein the surface stabilizer comprises at least one of a compound containing a citric acid salt, a compound containing a dodecyl sulfate salt, or a compound containing polyvinylpyrrolidone.

7. The method of claim 6, wherein the compound containing the citric acid salt comprises at least one of sodium citrate, potassium citrate, or triethyl citrate.

8. The method of claim 4, wherein the ligand comprises at least one of hydrazine, sodium borohydride, lithium aluminum hydride, oxalic acid, formic acid, ascorbic acid, or hydrogen peroxide.

9. The method of claim 4, wherein the ligand is added in an amount such that a molar ratio of the transition metal included in the reaction solution to the ligand is in a range of 1:2 to 1:12.

10. The method of claim 4, wherein step (B) is performed at 25°C to 80°C.

11. The method of claim 4, wherein the basic aqueous solution is added in an amount such that a molar ratio of the transition metal included in the reaction solution to the basic aqueous solution is in a range of 1:2 to 1:12.

12. A method of preparing a positive electrode active material, the method comprising:
mixing the positive electrode active material precursor of any one of claims 1 to 3 with a lithium-containing raw material and performing a heat treatment at 700°C to 820°C to obtain a lithium transition metal oxide in a form of a single particle.
